# EUROPÄISCHE PATENTSCHRIFT

(11) **EP 1 849 645 B1**
(45) Veröffentlichungstag und Bekanntmachung des Hinweises auf die Patenterteilung: **28.10.2009**
(21) Anmeldenummer: 07004843.4
(22) Anmeldetag: 09.03.2007
(51) Int. Cl.: B60K 31/02

(54) **Fahrgeschwindigkeitsregelungseinrichtung**
Cruise control device
Dispositif de régulation de la vitesse de marche

(30) Priorität: 29.04.2006 DE 102006020063
(43) Veröffentlichungstag der Anmeldung: 31.10.2007
(73) Patentinhaber: Dr. Ing. h.c. F. Porsche Aktiengesellschaft, 70435 Stuttgart (DE)
(72) Erfinder: Gruenter, Thomas, 71711 Steinheim-Höpfigheim (DE); Guendogan, Guerol, 71737 Kirchberg/Murr (DE)

(56) Entgegenhaltungen:
- GB-A- 2 382 158
- JP-A- 2004 106 708
- US-A- 6 078 859
- US-A1- 2002 133 285
- US-B1- 6 246 129

## Beschreibung

Die Erfindung betrifft eine Fahrgeschwindigkeitsregelungseinrichtung wie sie beispielsweise bereits aus der GB-2 382 158 A bekannt ist. Aus dieser GB-2 382 158 A ist eine Fahrgeschwindigkeitsenrichtung für ein Krftfahrzeug, mit einer als Taster ausgebildeten Betätigungseinrichtung, wobei durch eine Betätigung der Betätigungseinrichtung die Fahrgeschwindigkeitsregelungseinrichtung von einem ausgeschalteten Betriebszustand in einen eingeschalteten Regelungs-Betriebszustand überführbar ist, wobei die Fahrgeschwindigkeitsregelungseinrichtung umfasst:
a) ein Speichermittel, das einen Zustand der Fahrgeschwindigkeitsregelungseinrichtung speichert, nämlich ob die Fahrgeschwindigkeitsregelungseinrichtung unmittelbar vor oder bei Ausschaltung einer Zündungseinrichtung des Kraftfahrzeugs einen eingeschalteten Betriebszustand, nämlich den eingeschalteten Regelungs-Betriebszustand, einnimmt;
b) ein Auslesemittel, das bei oder unmittelbar nach Einschaltung der Zündungseinrichtung des Kratfahrzeugs aus dem Speichermittel den gespeicherten Zustand der Fahrgeschwindigkeitsregelungseinrichtung ausliest, wobei dann, wenn gemäß dem ausgelesenen Zustand die Fahrgeschwindigkeitsregelungseinrichtung unmittelbar vor oder bei der letzten Ausschaltung der Zündungseinrichtung den eingeschalteten Regelungs-Betriebszustand eingenommen hat, dieselbe automatisch in den eingeschalteten Regelungs-Betriebszustand überführbar ist.

Eine Fahrgeschwindigkeitsregelungseinrichtung wird auch als Tempostat oder Tempomat bezeichnet. Aus der Praxis bekannte Fahrgeschwindigkeitsregelungseinrichtungen verfügen über eine an einem Lenkstock eines Kraftfahrzeugs befestigte Betätigungseinrichtung, wobei durch Betätigen der Betätigungseinrichtung die Fahrgeschwindigkeitsregelungseinrichtung von einem ausgeschalteten Betriebszustand in einen eingeschalteten Standby-Betriebszustand überführt werden kann. Durch eine weitere Betätigung der Betätigungseinrichtung ist die Fahrgeschwindigkeitsregelungseinrichtung von dem eingeschalteten Standby-Betriebszustand in einen eingeschalteten Regelungs-Betriebszustand überführbar, wobei im Regelungs-Betriebszustand insbesondere die einzuhaltende bzw. zu regelnde Fahrgeschwindigkeit eingestellt werden kann. Eine Fahrgeschwindigkeitsregelungseinrichtung kann demnach nicht unmittelbar vom ausgeschalteten Betriebszustand in den Regelungs-Betriebszustand überführt werden, sondern nur vom eingeschalteten Standby-Betriebszustand aus.

Aus der Praxis sind Fahrgeschwindigkeitsregelungseinrichtungen bekannt, deren Betätigungseinrichtung als Raster ausgebildet ist.
Fahrgeschwindigkeitsregelungseinrichtungen mit einer als Raster ausgebildeten Betätigungseinrichtung verfügen über den Vorteil, dass nach Betätigung der Betätigungseinrichtung zur Überführung der Fahrgeschwindigkeitsregelungseinrichtung von dem ausgeschalteten Betriebszustand in den eingeschalteten Standby-Betriebszustand die Betätigungseinrichtung der Fahrgeschwindigkeitsregelungseinrichtung in der entsprechenden Raststellung verbleibt. Diese Raststellung einer als Raster ausgebildeten Betätigungseinrichtung einer Fahrgeschwindigkeitsregelungseinrichtung kann bei bzw. nach Zündung eines Kraftfahrzeugs eingelesen werden, so dass abhängig von der Raststellung der Betätigungseinrichtung die Fahrgeschwindigkeitsregelungseinrichtung automatisch in den Standby-Betriebszustand überführt werden kann. Dies erhöht den Komfort für einen Fahrer, da die Fahrgeschwindigkeitsregelungseinrichtung nicht manuell vom ausgeschalteten Betriebszustand in den eingeschalteten Standby-Betriebszustand überführen muss. Aus ästhetischen Gründen ist jedoch die Verwendung einer als Raster ausgebildeten Betätigungseinrichtung häufig nicht gewünscht.

Weiterhin sind aus der Praxis Fahrgeschwindigkeitsregelungseinrichtungen bekannt, deren Betätigungseinrichtung als Taster ausgebildet ist. Nach Betätigung einer als Taster ausgebildeten Betätigungseinrichtung kehrt dieselbe im Unterschied zu einer als Raster ausgebildeten Betätigungseinrichtung wieder in ihren Ausgangszustand selbsttätig zurück, weshalb Taster gegenüber Rastern aus ästhetischen Gründen bevorzugt sind. Bei oder nach Zündung eines Kraftfahrzeugs kann jedoch bei einer als Taster ausgebildeten Betätigungseinrichtung kein Schaltzustand eingelesen werden, weshalb es nach jedem Zünden des Kraftfahrzeugs erneut erforderlich ist, die Fahrgeschwindigkeitsregelungseinrichtung manuell vom ausgeschalteten Betriebszustand durch Betätigen der Betätigungseinrichtung in den eingeschalteten Standby-Betriebszustand zu überführen. Dies wird von Fahrern, die Fahrgeschwindigkeitsregelungseinrichtungen mit einer als Raster ausgebildeten Betätigungseinrichtung kennen, als unkomfortabel empfunden.

Hiervon ausgehend liegt der vorliegenden Erfindung das Problem zu Grunde, eine neuartige Fahrgeschwindigkeitsregelungseinrichtung zu schaffen, welches die Vorteile einer Fahrgeschwindigkeitsregelungseinrichtung mit einer getasteten Betätigungseinrichtung mit den Vorteilen einer Fahrgeschwindigkeitsregelungseinrichtung mit einer gerasteten Betätigungseinrichtung kombiniert. Dieses Problem wird dadurch gelöst, dass die eingangs genannte Fahrgeschwindigkeitsregelungseinrichtung durch die Gesamtheit der Merkmale des Anspruchs 1 weitergebildet ist.

Die Fahrgeschwindigkeitsregelungseinrichtung umfasst zumindest: a) ein Speichermittel, das einen Zustand der Fahrgeschwindigkeitsregelungseinrichtung speichert, nämlich ob die Fahrgeschwindigkeitsregelungseinrichtung unmittelbar vor oder bei Ausschaltung einer Zündungseinrichtung des Kraftfahrzeugs einen eingeschalteten Betriebszustand, nämlich den Standby-Betriebszustand oder den eingeschalteten Regelungs-Betriebszustand, einnimmt; b) ein Auslesemittel, das bei oder unmittelbar nach Einschaltung der Zündungseinrichtung des Kraftfahrzeugs aus dem Speichermittel den gespeicherten Zustand der Fahrgeschwindigkeitsregelungseinrichtung ausliest, wobei dann, wenn gemäß dem ausgelesenen Zustand die Fahrgeschwindigkeitsregelungseinrichtung unmittelbar vor oder bei dem letzten Ausschaltung der Zündungseinrichtung einen eingeschalteten Betriebszustand eingenommen hat, die Fahrgeschwindigkeitsregelungseinrichtung automatisch in den eingeschalteten Standby-Betriebszustand überführbar ist.

Mit der Erfindung ist es möglich, bei einer Fahrgeschwindigkeitsregelungseinrichtung, die eine als Taster ausgebildete Betätigungseinrichtung aufweist, dieselbe Funktionalität bereitzustellen, wie bei einer Fahrgeschwindigkeitsregelungseinrichtung mit einer als Raster ausgebildeten Betätigungseinrichtung. Hierdurch kann der Komfort von Fahrgeschwindigkeitsregelungseinrichtungen, die eine als Taster ausgebildete Betätigungseinrichtung aufweisen, erhöht werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

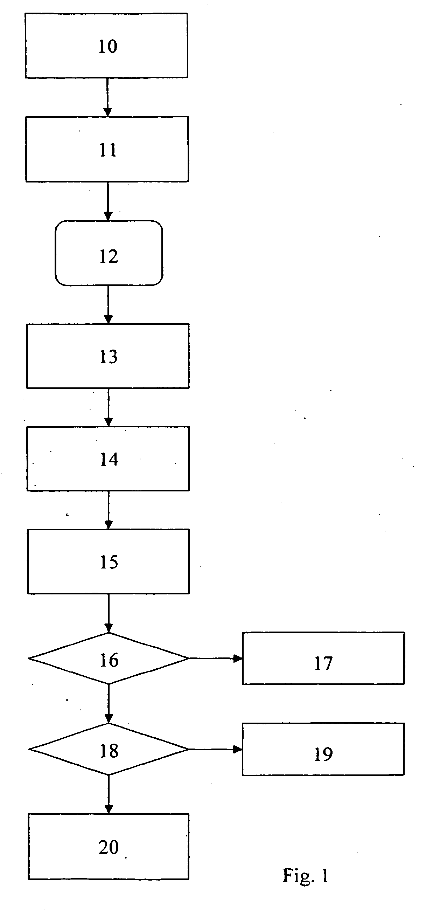

Fig. 1 ein schematisiertes Diagramm zur Verdeutlichung der Funktionsweise der erfindungsgemäßen Fahrgeschwindigkeitsregelungseinrichtung.

Die hier vorliegende Erfindung betrifft eine Fahrgeschwindigkeitsregelungseinrichtung für ein Kraftfahrzeug, wobei die Fahrgeschwindigkeitsregelungseinrichtung eine an einem Lenkstock oder Lenkrad des Kraftfahrzeugs befestigte Betätigungseinrichtung aufweist. Die Betätigungseinrichtung ist dabei als Taster ausgeführt, wobei durch eine Betätigung der Betätigungseinrichtung die Fahrgeschwindigkeitsregelungseinrichtung von einem ausgeschalteten Betriebszustand in einen eingeschalteten Standby-Betriebszustand überführbar ist. Durch eine weitere Betätigung der Betätigungseinrichtung ist die Fahrgeschwindigkeitsregelungseinrichtung von dem eingeschalteten Standby-Betriebszustand in einen eingeschalteten Regelungsbetriebszustand überführbar, wobei im Regelungs-Betriebszustand insbesondere die von der Fahrgeschwindigkeitsregelungseinrichtung zu regelnde Fahrgeschwindigkeit eingestellt werden kann.

Erfindungsgemäß umfasst die Fahrgeschwindigkeitsregelungseinrichtung ein Speichermittel, welches einen Zustand der Fahrgeschwindigkeitsregelungseinrichtung speichert, nämlich den Zustand, ob die Fahrgeschwindigkeitsregelungseinrichtung unmittelbar vor oder bei Ausschalten einer Zündungseinrichtung des Kraftfahrzeugs einen eingeschalteten Betriebszustand einnimmt. Unter dem eingeschalteten Betriebszustand kann sowohl der Standby-Betriebszustand als auch der Regelungs-Betriebszustand verstanden werden.

Das Speichern dieses Zustands der Fahrgeschwindigkeitsregelungseinrichtung im Speichermittel ist im Diagramm der Fig. 1 durch den Block 10 visualisiert.

Dann, wenn die Fahrgeschwindigkeitsregelungseinrichtung unmittelbar vor oder bei Ausschalten der Zündungseinrichtung einen eingeschalteten Betriebszustand einnimmt, ist im Speichermittel vorzugsweise der logische Zustand "1" speicherbar. Nimmt hingegen die Fahrgeschwindigkeitsregelungseinrichtung unmittelbar vor oder bei Ausschalten der Zündungseinrichtung einen ausgeschalteten Betriebszustand ein, so ist in Block 10 im Speichermittel vorzugsweise der logische Zustand "0" speicherbar.

Vorzugsweise speichert das Speichermittel der Fahrgeschwindigkeitsregelungseinrichtung gemäß dem Block 11 weiterhin das Komplement zu dem in Block 10 gespeicherten Zustand. Speichert demnach in Block 10 das Speichermittel dann, wenn sich die Fahrgeschwindigkeitsregelungseinrichtung unmittelbar vor oder bei Ausschalten der Zündungseinrichtung in einem eingeschalteten Betriebszustand befindet, den logischen Zustand "1", so speichert das Speichermittel in Block 11 als Komplement den logischen Zustand "0". Dann hingegen, wenn in Block 10 bei einer ausgeschalteten Fahrgeschwindigkeitsregelungseinrichtung das Speichermittel den logischen Zustand "0" gespeichert, so speichert das Speichermittel in Block 11 als Komplement den logischen Zustand "1".

Weiterhin verfügt die erfindungsgemäße Fahrgeschwindigkeitsregelungseinrichtung über ein Auslesemittel, welches bei oder unmittelbar nach Einschalten der Zündungseinrichtung des Kraftfahrzeugs aus dem Speichermittel den gespeicherten Zustand der Fahrgeschwindigkeitsregelungseinrichtung ausliest. In Fig. 1 ist das Starten der Zündungseinrichtung durch den Block 12 visualisiert. Das Auslesen des gemäß Block 10 im Speichermittel gespeicherten Zustands ist durch den Block 13 dargestellt.

Vorzugsweise liest das Auslesemittel bei oder unmittelbar nach Einschalten der Zündungseinrichtung des Kraftfahrzeugs nicht nur gemäß Block 13 den gemäß Block 10 im Speichermittel gespeicherten Zustand der Fahrgeschwindigkeitsregelungseinrichtung aus, sondern vielmehr auch gemäß Block 14 das gemäß Block 11 gespeicherte Komplement des Zustands der Fahrgeschwindigkeitsregelungseinrichtung.

Weiterhin verfügt die erfindungsgemäße Fahrgeschwindigkeitsregelungseinrichtung vorzugsweise über ein Berechnungsmittel, welches im Sinne des Blocks 15 aus dem gemäß Block 13 aus dem Speichermittel ausgelesenen, gespeicherten Zustand der Fahrgeschwindigkeitsregelungseinrichtung ein Komplement des gespeicherten Zustands errechnet.

Neben dem Speichermittel, dem Auslesemittel und vorzugsweise dem Berechnungsmittel verfügt die Fahrgeschwindigkeitsregelungseinrichtung über ein Auswertemittel, mit Hilfe dessen der aus dem Speichermittel gemäß Block 13 ausgelesene Zustand der Fahrgeschwindigkeitsregelungseinrichtung ausgewertet werden kann. Dann, wenn gemäß dem in Block 13 ausgelesenen, gespeicherten Zustand die Fahrgeschwindigkeitsregelungseinrichtung unmittelbar vor oder bei dem letzten Ausschalten der Zündungseinrichtung des Kraftfahrzeugs einen eingeschalteten Betriebszustand eingenommen hatte, ist die Fahrgeschwindigkeitsregelungseinrichtung automatisch in den eingeschalteten Standby-Betriebszustand überführbar. Dann hingegen, wenn gemäß dem in Block 13 ausgelesenen, gespeicherten Zustand die Fahrgeschwindigkeitsregelungseinrichtung unmittelbar vor oder bei dem letzten Ausschalten der Zündungseinrichtung einen ausgeschalteten Betriebszustand eingenommen hatte, wird die Fahrgeschwindigkeitsregelungseinrichtung nicht automatisch in den eingeschalteten Standby-Betriebszustand überführt, sondern im ausgeschalteten Betriebszustand belassen.

Die obige Auswertung des in Block 13 aus dem Speichermittel ausgelesenen, gespeicherten Zustands der Fahrgeschwindigkeitsregelungseinrichtung ist in Fig. 1 durch Blöcke 16, 17 und 20 visualisiert, wobei in Block 16 ermittelt wird, ob nach dem gemäß Block 13 ausgelesenen, gespeicherten Zustand die Fahrgeschwindigkeitsregelungseinrichtung unmittelbar vor oder bei dem letzten Ausschalten der Zündungseinrichtung einen eingeschalteten Betriebszustand eingenommen hatte.

Ist dies nicht der Fall, so verbleibt die Fahrgeschwindigkeitsregelungseinrichtung gemäß Block 17 im ausgeschalteten Betriebszustand. Ist dies hingegen der Fall, so ist die Fahrgeschwindigkeitsregelungseinrichtung gemäß Block 20 automatisch in den eingeschalteten Standby-Betriebszustand überführbar.

Wie bereits oben erwähnt, ist vorzugsweise in Block 14 das gespeicherte Komplement des gespeicherten Zustands der Fahrgeschwindigkeitsregelungseinrichtung aus dem Speichermittel auslesbar, wobei in Block 15 aus dem in Block 13 ausgelesenen, im Speichermittel gespeicherten Zustand der Fahrgeschwindigkeitsregelungseinrichtung ein Komplement errechenbar.

Vorzugsweise wird dann bei oder unmittelbar nach Einschalten der Zündungseinrichtung mit Hilfe des Auswertemittels überprüft, ob das gemäß Block 15 errechnete Komplement mit dem gemäß Block 14 ausgelesenen, gespeicherten Komplement übereinstimmt. Dieser Vergleich erfolgt in Block 18 der Fig. 1.

Fällt dieser Vergleich positiv aus, entspricht also das errechnete Komplement dem gespeicherten Komplement, so ist gemäß Block 20 die Fahrgeschwindigkeitsregelungseinrichtung automatisch in den eingeschalteten Standby-Betriebszustand überführbar.

Fällt hingegen dieser Vergleich negativ aus, entspricht also das errechnete Komplement nicht dem ausgelesenen Komplement, so wird die Fahrgeschwindigkeitsregelungseinrichtung nicht automatisch in den eingeschalteten Standby-Betriebszustand überführt, sondern verbleibt gemäß Block 19 in einem ausgeschalteten Betriebszustand.

Die oben erwähnten Mittel der erfindungsgemäßen Fahrgeschwindigkeitsregelungseinrichtung, nämlich das Speichermittel, das Auslesemittel, das Berechnungsmittel und das Auswertemittel, können entweder in eine Motorsteuerungseinrichtung des Kraftfahrzeugs, die auch als DME (Digitale Motor Elektronik) bezeichnet wird, oder in eine dem Lenkstock des Kraftfahrzeugs zugeordnete Steuerungseinrichtung integriert sein.

## Patentansprüche

1. Fahrgeschwindigkeitsregelungseinrichtung für ein Kraftfahrzeug, mit einer an einem Lenkstock oder am Lenkrad des Kraftfahrzeugs befestigten, als Taster ausgebildeten Betätigungseinrichtung, wobei durch eine Betätigung der Betätigungseinrichtung die Fahrgeschwindigkeitsregelungseinrichtung von einem ausgeschalteten Betriebszustand in einen eingeschalteten Standby-Betriebszustand überführbar ist, und wobei durch eine weitere Betätigung der Betätigungseinrichtung die
Fahrgeschwindigkeitsregelungseinrichtung von dem Standby-Betriebszustand in einen eingeschalteten Regelungs-Betriebszustand überführbar ist, wobei die Fahrgeschwindigkeitsregelungseinrichtung umfasst :
a) ein Speichermittel, das einen Zustand der Fahrgeschwindigkeitsregelungseinrichtung speichert, nämlich ob die Fahrgeschwindigkeitsregelungseinrichtung unmittelbar vor oder bei Ausschaltung einer Zündungseinrichtung des Kraftfahrzeugs einen eingeschalteten Betriebszustand, nämlich den Standby-Betriebszustand oder den eingeschalteten Regelungs-Betriebszustand, einnimmt;
b) ein Auslesemittel, das bei oder unmittelbar nach Einschaltung der Zündungseinrichtung des Kraftfahrzeugs aus dem Speichermittel den gespeicherten Zustand der Fahrgeschwindigkeitsregelungseinrichtung ausliest, wobei dann, wenn gemäß dem ausgelesenen Zustand die Fahrgeschwindigkeitsregelungseinrichtung unmittelbar vor oder bei dem letzten Ausschaltung der Zündungseinrichtung einen eingeschalteten Betriebszustand eingenommen hat, dieselbe automatisch in den eingeschalteten Standby-Betriebszustand überführbar ist.

2. Fahrgeschwindigkeitsregelungseinrichtung nach Anspruch 1, **dadurch gekennzeichnet, dass** das Speichermittel weiterhin das Komplement zu dem Zustand, ob die Fahrgeschwindigkeitsregelungseinrichtung unmittelbar vor oder bei Ausschaltung einer Zündungseinrichtung des Kraftfahrzeugs einen eingeschalteten Betriebszustand einnimmt, speichert.

3. Fahrgeschwindigkeitsregelungseinrichtung nach Anspruch 2, **dadurch gekennzeichnet, dass** das Auslesemittel bei oder unmittelbar nach Einschaltung der Zündungseinrichtung aus dem Speichermittel weiterhin das gespeicherte Komplement ausliest.

4. Fahrgeschwindigkeitsregelungseinrichtung nach einem oder mehreren der Ansprüche 1 bis 3, **gekennzeichnet durch** ein Berechnungsmittel, das für den aus dem Speichermittel ausgelesenen, gespeicherten Zustand der Fahrgeschwindigkeitsregelungseinrichtung ein Komplement des gespeicherten Zustands errechnet.

5. Fahrgeschwindigkeitsregelungseinrichtung nach Anspruch 4, **gekennzeichnet durch** ein Auswertemittel, das bei oder unmittelbar nach Einschaltung der Zündungseinrichtung das errechnete Komplement mit gespeicherten Komplement vergleicht, wobei hiervon abhängig die Fahrgeschwindigkeitsregelungseinrichtung nur dann automatisch in den eingeschalteten Standby-Betriebszustand überführbar ist, wenn das errechnete Komplement dem gespeicherten Komplement entspricht.

## Claims

1. Cruise control device for a motor vehicle, having an activation device which is attached to a steering column assembly or to the steering wheel of the motor vehicle and is embodied as a key button, wherein by activating the activation device it is possible to transfer the cruise control device from a switched off operating state into a switched on standby operating state, and wherein by means of a further activation of the activation device it is possible to transfer the cruise control device from the standby operating state to a switched on control operating state, wherein the cruise control device comprises:
a) a storage means which stores a state of the cruise control device, specifically whether the cruise control device assumes a switched on operating state, specifically the standby operating state or the switched on control operating state, immediately before or when an ignition device of the motor vehicle is switched off;
b) a readout means which reads out the stored state of the cruise control device from the storage means when or immediately after the ignition device of the motor vehicle is switched on, wherein, if according to the read out state, the cruise control device has assumed a switched on operating state immediately before or when the ignition device is last switched off, said ignition device can be transferred automatically to the switched on standby operating state.

2. Cruise control device according to Claim 1, **characterized in that** the storage means continues to store the complement to the state as to whether the cruise control device assumes a switched on operating state immediately before or when an ignition device of the motor vehicle is switched off.

3. Cruise control device according to Claim 2, **characterized in that** the readout means continues to read out the stored complement from the storage means when or immediately after the ignition device is switched on.

4. Cruise control device according to one or more of Claims 1 to 3, **characterized by** a calculation means which calculates a complement of the stored state for the stored state of the cruise control device which has been read out from the storage means.

5. Cruise control device according to Claim 4, **characterized by** an evaluation means which compares the calculated complement with the stored complement when or immediately after the ignition device is switched on, wherein, as a function of this, the cruise control device can be transferred automatically to the switched on standby operating state only if the calculated complement corresponds to the stored complement.

## Revendications

1. Dispositif de régulation de la vitesse de conduite d'un véhicule automobile, comprenant un dispositif d'actionnement réalisé sous forme de palpeur, fixé sur un levier de direction ou sur le volant de direction du véhicule automobile, un actionnement du dispositif d'actionnement permettant de transférer le dispositif de régulation de la vitesse de conduite d'un état de fonctionnement déconnecté dans un état de fonctionnement de veille connecté, et un autre actionnement du dispositif d'actionnement permettant de transférer le dispositif de régulation de la vitesse de conduite de l'état de fonctionnement de veille dans un état de fonctionnement de régulation connecté, le dispositif de régulation de la vitesse de conduite comprenant :
a) un moyen de mémoire qui mémorise un état du dispositif de régulation de la vitesse de conduite, à savoir si le dispositif de régulation de la vitesse de conduite adopte un état de fonctionnement connecté immédiatement avant ou au moment de la déconnexion d'un dispositif d'allumage du véhicule automobile, à savoir l'état de fonctionnement de veille, ou adopte l'état de fonctionnement de régulation connecté ;
b) un moyen de lecture qui lit, dans le moyen de mémoire, l'état mémorisé du dispositif de régulation de la vitesse de conduite au moment de la connexion ou immédiatement après la connexion du dispositif d'allumage du véhicule automobile, et en l'occurrence, lorsque conformément à l'état lu, le dispositif de régulation de la vitesse de conduite a adopté un état de fonctionnement connecté juste avant ou au moment de la dernière déconnexion du dispositif d'allumage, celui-ci pouvant être transféré automatiquement dans l'état de fonctionnement de veille connecté.

2. Dispositif de régulation de la vitesse de conduite selon la revendication 1, **caractérisé en ce que** le moyen de mémoire mémorise en outre le complément de l'état de savoir si le dispositif de régulation de la vitesse de conduite adopte un état de fonctionnement connecté immédiatement avant ou au moment de la déconnexion d'un dispositif d'allumage du véhicule automobile.

3. Dispositif de régulation de la vitesse de conduite selon la revendication 2, **caractérisé en ce que** le moyen de lecture lit en outre le complément mémorisé dans le moyen de mémoire au moment de la connexion ou immédiatement après la connexion du dispositif d'allumage.

4. Dispositif de régulation de la vitesse de conduite selon l'une quelconque ou plusieurs des revendications 1 à 3, **caractérisé par** un moyen de calcul qui calcule, pour l'état mémorisé du dispositif de régulation de la vitesse de conduite, lu dans le moyen de mémoire, un complément de l'état mémorisé.

5. Dispositif de régulation de la vitesse de conduite selon la revendication 4, **caractérisé par** un moyen d'analyse, qui, au moment de la connexion ou directement après la connexion du dispositif d'allumage compare le complément calculé avec le complément mémorisé, et en fonction de cette comparaison, le dispositif de régulation de la vitesse de conduite peut alors être automatiquement transféré dans l'état de fonctionnement de veille connecté, seulement si le complément calculé correspond au complément mémorisé.
